(19) **Europäisches Patentamt / European Patent Office / Office européen des brevets**

(11) **EP 4 537 921 B1**

(12) **FASCICULE DE BREVET EUROPEEN**

(45) Date de publication et mention de la délivrance du brevet:
**03.12.2025 Bulletin 2025/49**

(21) Numéro de dépôt: **23306799.0**

(22) Date de dépôt: **13.10.2023**

(51) Classification Internationale des Brevets (IPC):
**B01D 11/04** *(2006.01)* **B01F 33/30** *(2022.01)*
**B01L 3/00** *(2006.01)*

(52) Classification Coopérative des Brevets (CPC):
**B01F 33/30; B01D 11/0484; B01D 11/0496; B01L 3/5025; B01L 3/502715**

(54) **SYSTÈME D'EXTRACTION MICROFLUIDIQUE À HAUT RENDEMENT POUR L'EXTRACTION D'ACTIFS NATURELS**

**MIKROFLUIDISCHES HOCHDURCHSATZEXTRAKTIONSSYSTEM ZUR EXTRAKTION VON NATÜRLICHEN WIRKSTOFFEN**

**HIGH-THROUGHPUT MICROFLUIDIC EXTRACTION SYSTEM FOR THE EXTRACTION OF NATURAL ASSETS**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(43) Date de publication de la demande:
**16.04.2025 Bulletin 2025/16**

(73) Titulaire: **Chanel Parfums Beauté 92200 Neuilly-sur-Seine (FR)**

(72) Inventeurs:
• **RILHAC, Vincent 93500 PANTIN (FR)**
• **TORIBIO, Alix 93500 PANTIN (FR)**

(74) Mandataire: **Santarelli Tour Trinity 1 bis Place de la Défense 92400 Courbevoie (FR)**

(56) Documents cités:
**EP-A2- 1 391 237      WO-A1-2019/168890**
**WO-A1-2021/058806     FR-A1- 3 059 909**
**US-B2- 7 435 392**

**Description**

**DOMAINE TECHNIQUE DE L'INVENTION**

La présente invention concerne le domaine de systèmes microfluidiques et du fractionnement d'extraits naturels par extraction liquide-liquide en continu. L'invention concerne notamment une nouvelle approche et un système de parallélisation de réacteurs microfluidiques afin d'augmenter la productivité d'un tel système.

L'invention trouve notamment des applications dans la cosmétique et dans l'extraction ou production de composants à haute valeur ajoutée.

**ÉTAT DE LA TECHNIQUE**

La microfluidique est une technologie manipulant des fluides dans des systèmes intégrant des canaux dont au moins l'une des dimensions est de l'ordre ou proche du micromètre. Dans le domaine de l'extraction liquide-liquide, les canaux microfluidiques permettent d'écouler deux ou plusieurs liquides immiscibles côte à côte selon un régime laminaire, et une extraction par la diffusion des molécules au niveau de l'interphase entre les liquides. Il en résulte un système d'extraction maximisant la surface de contact entres les liquides et permettant d'augmenter les rendements d'extraction avec une utilisation réduite de solvant. De plus, ce système peut être opéré à température ambiante, et avoir donc une empreinte écologique plus favorable que les procédés d'extraction classique, tels que la distillation moléculaire, ou l'extraction liquide-liquide classique.

La demande WO2021/058806 au nom du déposant décrit un procédé d'extraction microfluidique pour le raffinage des huiles végétales et l'extraction de biomolécules d'intérêt cosmétique. Ce procédé met en œuvre un système d'extraction à puce microfluidique dite « en double Y », et dans lequel la puce microfluidique comporte un canal principal microfluidique agissant comme réacteur d'extraction et formant un serpentin alimenté d'un côté par deux entrées, et collecté au côté opposé par deux sorties. Ce design en double « Y » permet d'alimenter le canal principal avec une huile à raffiner par la première entrée, et une solution hydroalcoolique agissant comme solvant d'extraction dans la deuxième entrée. Le système comporte également un contrôleur de pression permettant d'injecter les deux liquides à partir de leurs réservoirs respectifs dans le système. En particulier, il est proposé de contrôler la pression d'injection de deux liquides de sorte à permettre un écoulement laminaire de ces derniers au sein du canal principal, et ceci à partir d'un point de jonction entre les deux entrées et jusqu'à leur sortie du canal principal. L'extraction est ainsi effectuée au niveau de l'interphase entre les deux liquides s'écoulant selon un régime laminaire au sein du canal principal. La solution hydroalcoolique, enrichie en biomolécules d'intérêt, est collectée par l'une de sorties du canal principal et l'huile raffinée par l'autre sortie. Ce procédé permet l'extraction en continu de biomolécules d'intérêt à partir des huiles naturelles, comme l'huile du café et de chia. Avantageusement, le procédé d'extraction est effectué à température ambiante et avec une haute efficacité d'extraction. Cependant, ce système et procédé d'extraction est limité par le faible débit d'huile pouvant être traité par la micropuce, et étant de l'ordre 0,001 µL/s à 500 µL/s.

Il est donc souhaitable de pouvoir augmenter le débit de traitement d'un système d'extraction microfluidique. Toutefois, il n'est pas question de résoudre ce problème avec un approche dit « scale up » dans lequel on augmenterait les dimensions du canal principal microfluidique pour augmenter le débit de traitement du système. Au contraire, il est essentiel de conserver des dimensions de l'ordre du micromètre (maximum d'un millimètre) dans le canal principal pour conserver les propriétés physiques du système et l'efficacité d'extraction. Afin de répondre à cette problématique, plusieurs chercheurs ont suggéré la parallélisation de puces microfluidiques pour augmenter la capacité de traitement de ces systèmes, une approche dite « scale out ». Toutefois, peu de réalisations de systèmes microfluidiques parallélisés ont été détaillées dans l'état de la technique.

Le brevet EP 1 391 237 B1 donne un exemple d'installation chimique à cinq puces microfluidiques parallélisées pour la production de gouttelettes avec un rendement global d'environ 1,5 L/h. En particulier, deux liquides sont alimentés dans 1500 canaux microfluidiques de type « Y », chacun comportant deux entrées alimentant un canal microfluidique principal dans lequel sont mélangés les deux liquides pour la production de gouttelettes. Selon ce mode de réalisation, une centaine de micro canaux en « Y » sont disposés circulairement sur un disque support. Ce disque à canaux microfluidiques est alimenté et collecté par des disques de distribution et de collecte intégrant respectivement des canaux de distribution et de collecte radiale de fluides. En particulier, le disque à canaux microfluidiques est pris en sandwich d'un côté et d'un autre par lesdits disques de distribution et de collecte. Les canaux microfluidiques communiquent avec les disques de distribution et de collecte au moyen des conduits verticaux formés par des perforations dans les disques. Afin d'augmenter le rendement de production, il est suggéré d'empiler trois disques identiques de canaux microfluidiques, et de sorte à superposer les entrées et les sorties desdits canaux microfluidiques pour les alimenter simultanément et collecter simultanément au moyen des conduits verticaux partagés. Chaque puce microfluidique comporte ainsi 300 canaux microfluidiques en Y alimentés et collectés verticalement au moyen de deux disques distributeurs et un disque collecteur.

L'installation chimique complète comporte 5 puces microfluidiques parallélisées, de sorte que le système intègre 1500 canaux microfluidiques. La parallélisation des micropuces n'est pas clairement décrite mais les puces microfluidiques sont illustrées alignées l'une à côté de l'autre suivant un axe droit. Ce système permet d'alimenter et collecter les 5 puces de manière centralisée avec un rendement satisfaisant. Toutefois, d'autres systèmes de puces microfluidiques sont encore nécessaires pour répondre aux besoins de l'extraction liquide-liquide de biomolécules, et la mise en parallèle d'un nombre plus élevé de puces microfluidiques.

EXPOSE DE L'INVENTION

La présente invention a comme but de fournir un système d'extraction microfluidique à haute productivité pour l'extraction d'actifs naturels. En particulier, l'invention concerne une nouvelle approche de mise en parallèle de puces microfluidiques permettant d'obtenir un système microfluidique hautement stable et facile à opérer, ainsi que pouvant mettre en œuvre un nombre élevé de puces microfluidiques opérant en parallèle.

Plus particulièrement, l'invention concerne un système microfluidique parallélisé à haute productivité, ledit système comportant une pluralité de puces microfluidiques configurées pour opérer en parallèle, et intégrant respectivement une pluralité de circuits microfluidiques reliés à un système d'alimentation et de collecte central dudit système microfluidique. Ce système microfluidique est particulier en ce que :

- le système d'alimentation et de collecte central comporte des canalisations superposées de distribution et de collecte radiale et homogène de fluide, chaque canalisation étant pourvue d'une ouverture centrale débouchant dans des ouvertures périphériques distribuées circulairement selon un premier rayon autour d'un centre dudit système d'alimentation et de collecte central, et étant destinées à la distribution ou la collecte d'un fluide, et en ce que :
- lesdites puces microfluidiques sont également agencées circulairement, et de manière concentrique aux ouvertures périphériques selon un deuxième rayon supérieur audit premier rayon.

L'invention propose ainsi un système microfluidique avec une approche de parallélisation que l'on peut qualifier de circulaire, et dans lequel le système d'alimentation et de collecte central est en position centrale dans le système microfluidique, avec l'ensemble de ses ouvertures périphériques pour la distribution et la collecte de fluides distribuées circulairement. Les puces microfluidiques entourent également ledit système d'alimentation et de collecte central selon un deuxième axe circulaire. Cette configuration est très avantageuse car elle permet de placer à une même distance toutes les puces microfluidiques des ouvertures centrales du système d'alimentation et de collecte central, ainsi que d'au moins de l'une de ses ouvertures périphériques. Il sera donc possible d'alimenter chaque puce microfluidique avec un même débit et de maitriser l'ensemble de résistances fluidiques dans le système pour permettre son opération de manière stable et aisée.

Dans le système microfluidique de l'invention, chaque circuit microfluidique comporte des entrées et des sorties reliées au système d'alimentation et de collecte central, de manière indépendante et au moyen des tubulures dédiées, lesdites tubulures reliant chacune des ouvertures périphériques des canalisations avec l'une dédites entrées ou desdites sorties des circuits microfluidiques.

En particulier, le système microfluidique comporte un nombre de canalisations de distribution radiale de flux égal au nombre de fluides à introduire dans le système, et un nombre de canalisations de collecte radiale de flux égal au nombre de fluides à collecter dans le système, et lesdites canalisations sont intégrées dans un ou plusieurs manifolds comportant une forme extérieure de cylindre, et avec les ouvertures périphériques desdites canalisations distribuées sur des parois cylindriques et latérales dudit ou desdits manifolds.

Dans un mode de réalisation préféré, ledit système est destiné à opérer avec deux fluides pour réaliser une extraction liquide-liquide, et dans lequel le système d'alimentation et de collecte central comporte deux manifolds superposés de forme extérieure cylindrique, chaque manifold intégrant deux desdites canalisations superposées de distribution ou de collecte radial de flux, de sorte que les ouvertures périphériques desdites deux canalisations sont distribuées sur des parois cylindriques et latérales de chaque manifold, un premier manifold distributeur pour l'alimentation des circuits microfluidiques avec deux fluides et un deuxième manifold collecteur pour la collecte desdits deux fluides en sortie de circuits microfluidiques.

De préférence, dans ledit mode de réalisation destiné à opérer avec deux fluides, les circuits microfluidiques sont du type double « Y », et lesdites puces microfluidiques sont disposées selon un plan d'écoulement vertical sur un cadre support, face au système d'alimentation et de collecte central et suivant ledit deuxième rayon.

Selon un autre aspect avantageux de l'invention, les tubulures sont connectées aux ouvertures périphériques, et aux entrées et aux sorties des circuits microfluidiques au moyen des connecteurs avec moyen de fixation, et de préférence au moyen de connecteurs visés.

Lesdits tubulures présentent une section transversale de l'ordre du micromètre et comportent :

- des tubulures de distribution reliant individuellement les ouvertures périphériques destinées à la distribution de fluides avec les entrées des circuits microfluidiques ; et

- des tubulures de collecte reliant individuellement les ouvertures périphériques destinées à la collecte de fluides avec les sorties des circuits microfluidiques,

et dans lequel au moins une partie desdites tubulures de distribution et/ou de collecte présentent des dimensions différentes par rapport aux autres tubulures de distribution et/ou de collecte.

De préférence, les tubulures de collecte présentent des dimensions supérieures à des dimensions des tubulures de distribution, et lesdites dimensions définissent une résistance fluidique au niveau des tubulures de collecte inférieure à une résistance fluidique au niveau des tubulures de distribution pour faciliter la collecte desdits fluides.

De même, les tubulures de de collecte peuvent présenter des dimensions supérieures à des dimensions des tubulures de distribution, et lesdites dimensions définissent une résistance fluidique au niveau des tubulures de de collecte inférieure à une résistance fluidique au niveau des tubulures de distribution pour faciliter la collecte desdits fluides.

Notamment, lorsque ledit système est destiné à opérer avec deux fluides a, b de viscosités différentes, à savoir un premier fluide de viscosité inférieure et un deuxième fluide de viscosité supérieure :

- les tubulures de distribution pour le premier fluide de viscosité inférieure présentent des dimensions inférieures par rapport aux dimensions des tubulures de distribution du deuxième fluide de viscosité supérieure, et lesdites dimensions définissent une résistance fluidique équilibrée pour les deux fluides au niveau des tubulures de distribution; et/ou dans lequel
- les tubulures de de collecte d'un premier fluide présentent des dimensions différentes par rapport aux tubulures de collecte du deuxième fluide, et afin de déséquilibrer un ratio de résistances fluidiques entre les deux fluides au niveau de tubulures de collecte et d'agir sur la pureté de la séparation de l'un desdits fluides.

Selon un mode de réalisation, le système microfluidique de l'invention est installé sur un support tel qu'un plateau et comporte une caméra mobile sur un rail entourant lesdites puces microfluidiques, ladite caméra étant configurée pour surveiller l'écoulement des fluides au niveau des circuits microfluidiques.

Le système de l'invention comporte également un système comportant une cuve de stockage pour chaque fluide à alimenter et à collecter dans le système, et un contrôleur de pression à voies multiples configuré pour mettre sous pression les fluides dans les cuves de stockage pour alimenter le système avec une pression configurable pour chaque cuve de stockage.

L'invention concerne également une mini-usine microfluidique comportant une pluralité de systèmes microfluidiques selon l'invention, chacun desdits systèmes microfluidiques étant installé sur un plateau, et lesdits plateaux étant disposés en étages sur un support, tel qu'un bras intégrant une canalisation d'alimentation et de collecte de ladite pluralité de systèmes microfluidiques et de préférence ladite mini-usine microfluidique est installée sur une plateforme mobile.

Ladite mini-usine microfluidique comporte une armoire de stockage comportant une cuve de stockage pour chaque fluide à alimenter et à collecter dans ladite mini-usine microfluidique, et un contrôleur de pression à voies multiples configuré pour mettre sous pression les fluides dans les cuves de stockage avec une pression configurable pour chaque cuve de stockage, et de sorte que ladite pluralité de systèmes microfluidiques est alimentée et collectée à partir desdites cuves de stockage.

Selon un mode de réalisation, ladite mini-usine microfluidique comporte cinq étages de systèmes microfluidiques installés respectivement sur lesdits plateaux, et chaque système microfluidique comporte 16 puces microfluidiques.

Enfin, l'invention concerne également un procédé d'extraction liquide-liquide pour l'obtention d'actifs naturels au moyen d'un système microfluidique, ledit procédé mettant en œuvre deux liquides, tel qu'une solution hydroalcoolique et une huile naturelle ; ledit procédé comportant une étape d'extraction dans laquelle on fait écouler lesdits liquides côte à côté selon un régime laminaire dans des circuits microfluidiques d'un système microfluidique ou d'une mini-usine microfluidique selon l'invention.

## BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :

- La [Fig 1] illustre de manière simplifiée un mode de réalisation d'un système microfluidique selon l'invention ;

- La [Fig 2] montre le système d'alimentation et de collecte central du système microfluidique selon le mode de réalisation de la figure 1.

- La [Fig 3] montre une analogie entre la mise en équilibre d'un circuit électrique en parallèle (a) et une parallélisation de puces microfluidiques (b) ;

- La [Fig 4] illustre la configuration d'une puce microfluidique de type « double Y » intégrant quatre circuits microfluidiques.

- La [Fig. 5] illustre schématiquement les dimensions d'un canal microfluidique et la répartition de volume occupé par l'éthanol et l'huile en écoulement laminaire au travers dudit canal microfluidique.

- La [Fig. 6] illustre les deux circuits de conduits superposés à l'intérieur d'un manifold selon le mode de réalisation de la figure 1, et étant configurés selon le principe de partage homogène et radial de flux.

- La [Fig. 7] illustre le système microfluidique de la figure 1 sur un plateau support intégrant une caméra mobile autour dudit système.

- La [Fig. 8] illustre une mini-usine microfluidique intégrant 5 étages de systèmes microfluidiques opérant en parallèle.

## DESCRIPTION DÉTAILLÉE DE L'INVENTION

La présente invention a comme but de fournir un système d'extraction microfluidique parallélisé à haut rendement pour l'extraction d'actifs naturels. L'invention trouve une application dans le raffinement des huiles naturelles et l'extraction de biomolécules d'intérêt pour son utilisation comme actifs en cosmétique. Le système de l'invention peut être mis en œuvre également pour l'extraction liquide-liquide de tout type de molécule, soit pour la production des particules et/ou émulsions au sein du système microfluidique ou l'application d'un traitement physico-chimique.

En particulier, l'invention vise un système microfluidique pour l'extraction liquide-liquide intégrant une pluralité de puce microfluidiques opérant en parallèle, et requérant un écoulement de fluides laminaire au sein des circuits microfluidiques.

Tel qu'il a été déjà mentionné, la mise en parallèle des puces microfluidiques est l'une des solutions envisageables pour augmenter le rendement d'un système microfluidique. Il est également souhaité de pouvoir opérer un tel système de manière centralisée, et donc de pouvoir alimenter et collecter de manière simultanée l'ensemble de puces microfluidiques. Cependant, plusieurs difficultés techniques sont rencontrées lors de la parallélisation d'un tel système, notamment au niveau de sa mise en stabilité et de son opération.

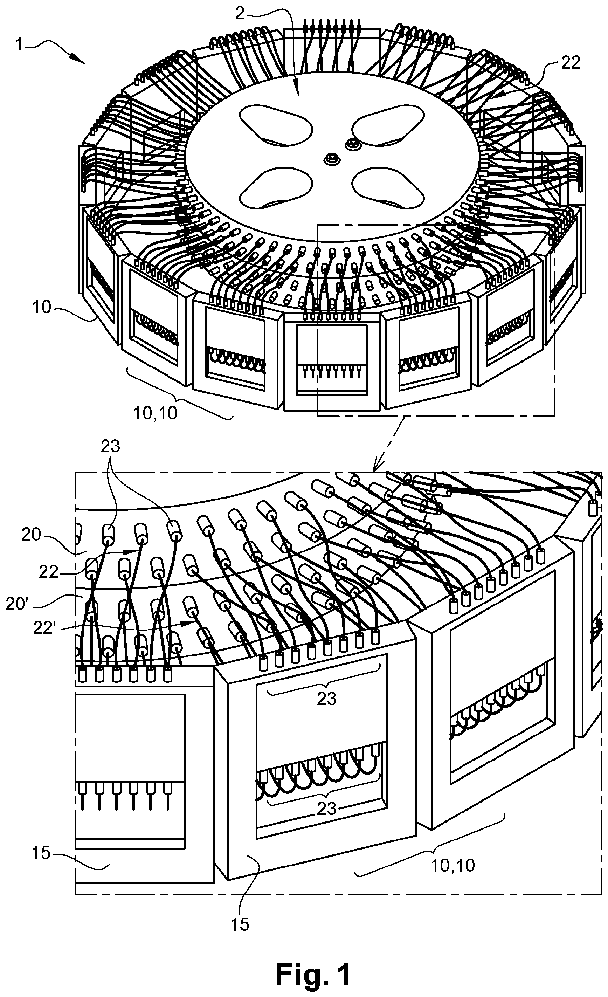

La présente invention concerne donc un système microfluidique parallélisé à haut rendement et à haute stabilité pour l'extraction liquide-liquide à écoulement laminaire. La figure 1 illustre un mode de réalisation d'un système microfluidique 1 selon l'invention, ce dernier comportant un système d'alimentation et de collecte central 2 et plusieurs puces microfluidiques 10 configurées pour opérer en parallèle. De manière particulière, les puces microfluidiques 10 sont agencées circulairement autour du système d'alimentation et de collecte central 2.

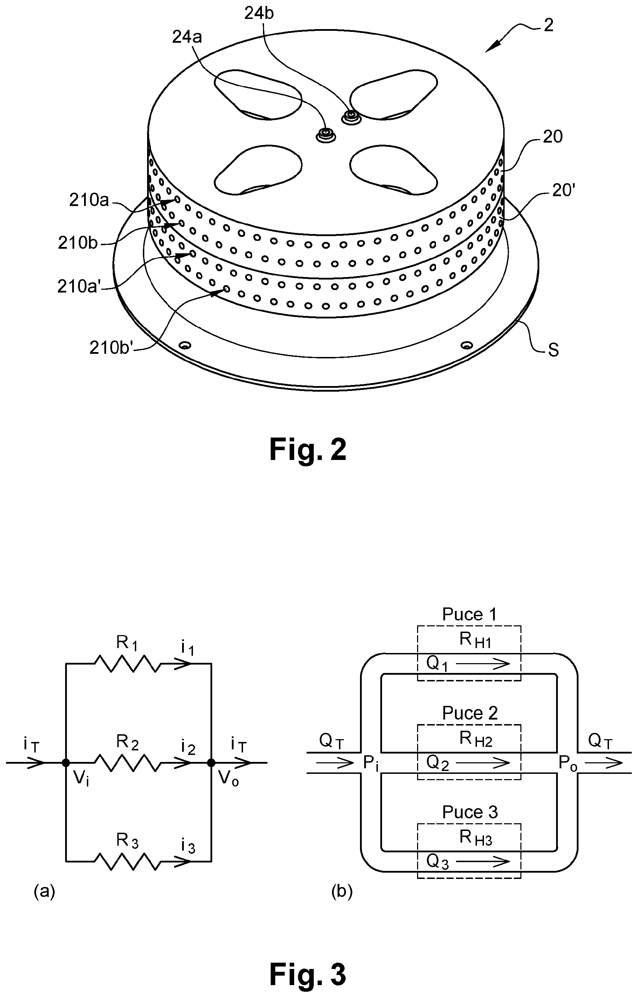

Dans ce mode de réalisation le système d'alimentation et de collecte central 2 (Fig. 2) comporte deux manifolds 20, 20' en forme de cylindre de faible hauteur et à section circulaire, les deux manifolds étant superposés sur un support S, et intégrant des canalisations (non visibles sur la figure 1) nécessaires à l'alimentation et la collecte centrale du système microfluidique 1. Par manifold on entend donc une pièce intégrant au moins une canalisation à plusieurs ouvertures permettant de distribuer ou de collecter un fluide, c'est-à-dire un collecteur ou un distributeur. Dans la présente invention le premier manifold est dit « manifold distributeur 20 » car il est destiné à alimenter le système, et le deuxième manifold est dit « manifold collecteur 20' » car il est destiné à collecter le système. Les deux manifolds 20, 20'sont toutefois identiques, et se distinguent uniquement par la direction du flux qu'ils acheminent dans ce mode de réalisation.

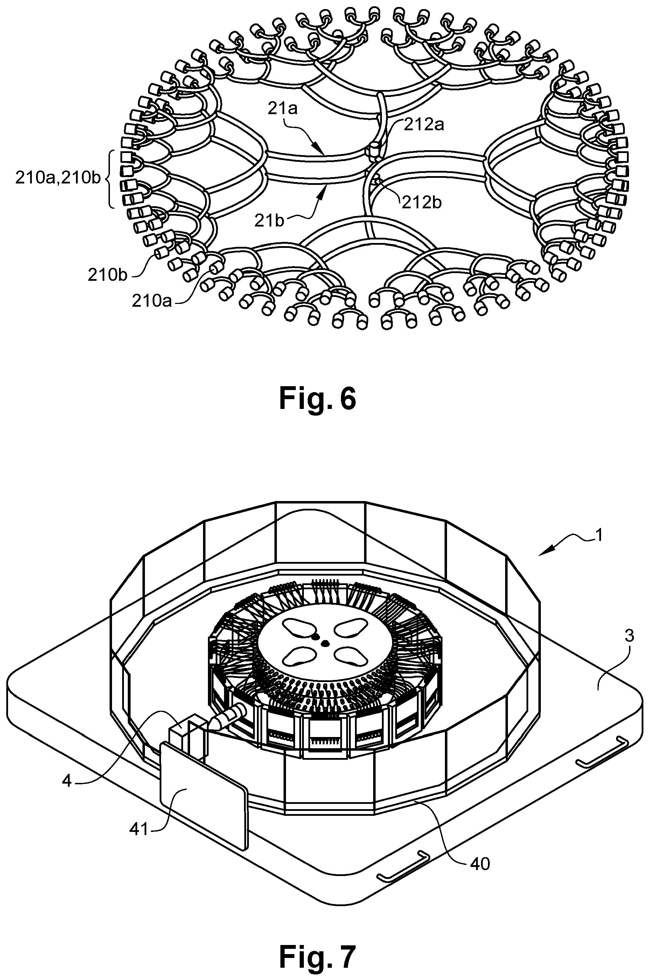

Chaque canalisation du système d'alimentation et de collecte central est pourvue d'une ouverture centrale 212a, 212b (visibles sur la figure 6) et d'une pluralité des ouvertures périphériques 210a, 210b, 210a', 210b' distribuées circulairement sur une paroi latérale du cylindre, et selon un premier rayon autour d'un centre dudit système de collecte et d'alimentation central. Une face supérieure du manifold comporte des connecteurs de flux central 24a, 24b reliés audites ouvertures centrales 212a, 212b par un raccord, et de sorte à permettre une connexion desdites canalisations à partir d'un seul côté du manifold. Le premier connecteur de flux central 24a est situé au centre du système microfluidique et au centre et sur une surface supérieure du manifold, le deuxième connecteur est situé en décalage et à côté du premier connecteur de flux central 24a.

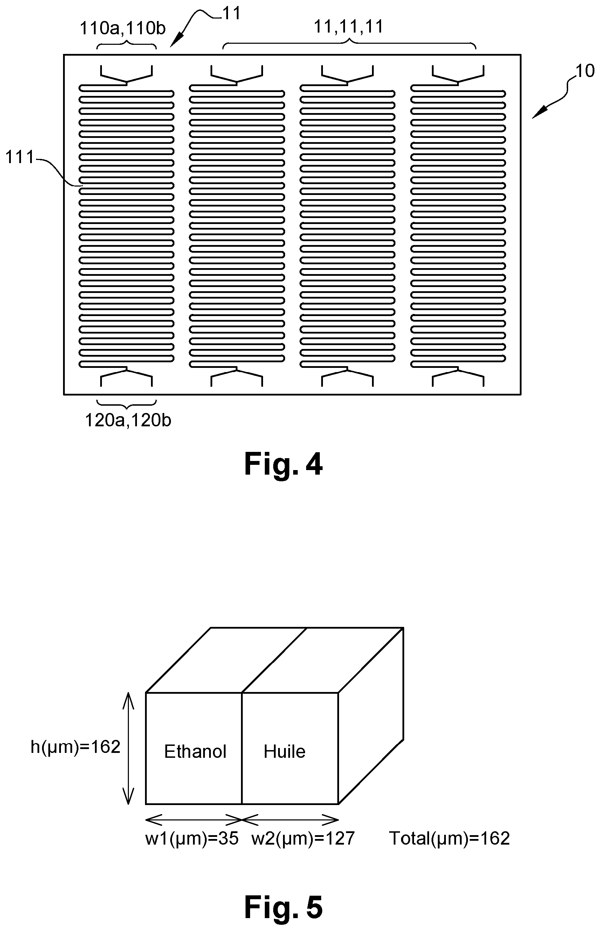

Un nombre de canalisations à intégrer dans le système d'alimentation et de collecte central est fonction du nombre de fluides à introduire et à collecter dans le système microfluidique. Sur l'exemple non limitatif de la figure 1, le système est alimenté et collecté avec deux fluides, chaque manifold 20, 20' est donc pourvu de deux canalisations 21a, 21b (voir fig. 6), et présente deux rangs des ouvertures périphériques 210a, 210b, 210'a, 210'b, un premier rang appartenant à l'une de canalisations et un deuxième rang à la deuxième canalisation. Ces ouvertures périphériques permettent de relier les puces microfluidiques au système d'alimentation et de collecte central au moyen des tubulures 22, 22'. Les détails d'implémentation de cette liaison ainsi que des canalisations seront abordés plus loin en références aux figures 5 et 6.

L'invention propose également d'agencer circulairement lesdites puces microfluidiques 10 autour du système d'alimentation et de collecte central 2, ainsi que de manière concentrique aux ouvertures périphériques selon un deuxième rayon supérieur audit premier rayon. Avantageusement, cette disposition circulaire permet de positionner toutes les puces microfluidiques à la même distance d'un centre du système d'alimentation et de collecte central. De même, toutes les puces microfluidiques se trouvent à une même distance d'au moins l'une des ouvertures périphériques 210a, 210b, 210a', 210b' du système d'alimentation et de collecte central. Il est ainsi possible d'avoir une mise en équilibre très fine des résistances fluidiques au sein du système, et une mise en stabilité aisée et rapide du système microfluidique 1.

En effet, suite à plusieurs configurations de parallélisation testées, les inventeurs ont mis en évidence que cette approche de parallélisation dite « circulaire » est la plus avantageuse pour la mise en parallèle d'un nombre important de puces microfluidiques à écoulement laminaire. Bien entendu, cette disposition circulaire pourrait également prendre la forme d'un polygone régulier, le plus importante étant que la distribution des ouvertures périphériques des canalisations et des puces microfluidiques puisse être faite de manière régulière, et permettant de positionner toutes les puces microfluidiques à une même distance d'une des ouvertures périphériques des manifolds et/ou de leur centre axial.

Afin de comprendre la mise en équilibre de ce système microfluidique, il est possible de faire une analogie à la mise en équilibre d'un circuit en dérivation tel qu'il est illustré à la figure 3 pour un système à trois puces microfluidiques. C'est d'ailleurs une analogie décrite dans la littérature qui permet de considérer un procédé microfluidique comme un système électrique où la loi d'Ohm est aussi respectée :

$$U \text{ (tension)} = R \text{ (résistance)} * I \text{ (intensité)}$$

En mécanique des fluides la loi d'Ohm s'appelle la loi de Poiseuille où la tension représente la différence de pression entre la pression exercée par le contrôleur en entrée et la pression atmosphérique, dans notre cas, en sortie. L'intensité représente le débit volumique, et la résistance correspond aux résistances fluidiques du système tout le long de l'écoulement. La résistance fluidique est causée par les pertes de charge liées aux viscosités des fluides et aux dimensions des canaux parcourus. Sur la base de cette analogie et de manière similaire à un circuit en dérivation, la parallélisation devra être implémentée pour avoir les mêmes résistances dans l'ensemble des circuits microfluidiques du système en exerçant une pression unique.

Il en résulte qu'il est essentiel d'opérer chaque circuit microfluidique avec un débit identique afin de garantir la mise en équilibre du système. Il est donc tout d'abord nécessaire d'alimenter avec des débits de fluides identiques chaque circuit microfluidique. Avantageusement, les canalisations du manifold distributeur 20 et du manifold collecteur 20' de l'invention permettent une alimentation et collecte homogène des circuits microfluidiques 11. En effet, les canalisations sont configurées respectivement pour diviser un flux de manière homogène en plusieurs ouvertures périphériques 210a, 210b, 210a', 210b' destinées respectivement à alimenter individuellement chacun des circuits microfluidiques 11, soit à les collecter selon l'acheminement inverse pour le manifold collecteur 20'.

Toutefois, les inventeurs se sont aperçus qu'une distribution homogène des fluides au niveau de l'alimentation des circuits microfluidiques est insuffisante pour mettre en équilibre et opérer de manière optimale un tel système. En effet, ils ont constaté qu'il est nécessaire d'adapter également la résistance fluidique au sein des canalisations de distribution et de collecte afin d'équilibrer de manière optimale le système. Cette résistance fluidique au niveau du système d'alimentation et de collecte central affecte les débits obtenus dans les puces microfluidiques, et sa valeur est conditionnée par la longueur et la section des canalisations alimentant ou collectant les puces microfluidiques. L'invention propose donc de disposer les réacteurs microfluidiques autour du système d'alimentation et de collecte centrale, et de sorte à pouvoir positionner de manière équidistante les circuits microfluidiques avec chacune de canalisations de distribution et de collecte des manifolds (fig. 1).

L'invention propose donc une parallélisation de puces microfluidiques agencées circulairement, et permettant la mise en équilibre la plus fine possible de résistances fluidiques et de débits au sein du système. En effet, il devient possible d'avoir des longueurs équivalents des canalisations de distribution et de collecte pour alimenter ou collecter chaque canaux microfluidique.

Au contraire, une parallélisation de puces microfluidiques configurés selon un axe droit ou linéaire n'a pas permis d'obtenir un système à haute stabilité et pouvant être alimenté et opéré de manière centralisée. En effet, une parallélisation dans laquelle les puces microfluidiques sont disposées selon un agencement linéaire, implique que les canalisations de distribution et de collecte alimentant chaque puce auront une longueur différente en fonction du positionnement des puces microfluidiques. Les canalisations alimentant les puces microfluidiques les plus proches à l'entrée centrale d'alimentation auront une longueur plus courte que les canalisations et les conduits alimentant les puces microfluidiques dans les extrémités de l'agencement linéaire. De manière inattendue, les inventeurs ont constaté que ces différentes longueurs s'avèrent également importantes pour l'équilibre du système, et les débits obtenus dans les puces microfluidiques. Or, les canalisations du système d'alimentation et de collecte centrale ont des dimensions de l'ordre d'un ou quelques millimètres et leurs résistances fluidiques seraient en théorie négligeables sur les débits des circuits microfluidiques. Toutefois, les résistances fluidiques au sein du système d'alimentation central ont un effet sur l'opération et la stabilité du système. L'invention propose donc une approche de parallélisation basée sur la distribution et la collecte radiale des flux et la parallélisation circulaire de puces microfluidiques autour du système d'alimentation et de collecte central.

Dans le mode de réalisation préféré et illustré sur les figures, le système microfluidique est destiné à l'extraction liquide-liquide et les puces microfluidiques 10, 10' intègrent des circuits microfluidiques du type « double Y ». Comme visible sur la fig. 4, chaque circuit microfluidique 11 comporte deux entrées 110 alimentant un canal microfluidique 111 principal en forme de serpentin, et qui débouche dans deux sorties 120. Selon ce mode de réalisation non limitatif de l'invention, chaque puce microfluidique intègre quatre circuits microfluidiques 11 disposés en parallèle sur un substrat en verre, et le système comporte seize puces microfluidiques 10 et un total de soixante-quatre circuits microfluidiques 11. De même, chaque puce microfluidique 10 est insérée dans un cadre support permettant de maintenir en position verticale les puces microfluidiques, et notamment les circuits microfluidiques 11. Dans cet exemple non limitatif, les entrées 110a, 110b de circuits microfluidiques sont disposées du côté supérieur de puces microfluidiques et au niveau des ouvertures périphériques 210a, 210b du manifold distributeur 20, et les sorties 120a, 120b de circuits microfluidiques 11 sont disposées du côté inférieur des puces microfluidiques 10, face aux ouvertures périphériques 210a, 210b' du manifold collecteur 20'. La distribution se fait ainsi par un étage supérieur du système microfluidique et la collecte par un étage inférieur, toutefois un positionnement et écoulement inverse est possible également.

Dans d'autres modes de réalisation, le système microfluidique intègre d'autres types de circuits microfluidiques adaptés au type de traitement ou de réaction à effectuer avec le système microfluidique, par exemple en Y, ou à triple entrée/sortie.

De manière particulière, l'invention propose de relier le système d'alimentation et de collecte centrale 2 et les puces microfluidiques 10 au moyen des tubulures 22, 22' de faible diamètre, et notamment d'un diamètre interne égal ou inférieur à 1 mm, et compris entre 50 μm et 1000 μm, et de préférence entre 50 et 800 μm (fig. 1). Lesdits tubulures 22, 22', comportant des tubulures de distribution distributeurs 22, et de tubulures de collecte 22'. Avantageusement, chaque entrée 110 et chaque sortie 120 des puces microfluidiques 10 est alimentée et collectée par une tubulure 22, 22' dédiée. La résistance fluidique au sein d'un ensemble de tubulures 22, 22' du système peut être ainsi entièrement maitrisée.

Dans ce mode de réalisation, les deux fluides sont alimentés à partir des deux cuves de stockage dédiées à chaque fluide, et au moyen d'un contrôleur de pression unique à deux voies (non visibles sur la fig. 1). La pression exercée sur chaque cuve de stockage va pousser chaque fluide au travers du manifold distributeur 20, ensuite au travers des tubulures de distribution 22 et enfin au travers de puces microfluidiques 10, ainsi qu'en sortie du système au travers de tubulures de collecte 22', du manifold collecteur 20' et jusqu'à des cuves de collecte dédiées à chaque fluide. Les tubulures 22, 22' présentent une faible section et ont montré avoir un effet sur l'opération du système, affecter les débits, ainsi que la stabilité d'écoulement au sein des puces microfluidiques. De plus, si les résistances fluidiques sont trop importantes au sein des tubulures, des phénomènes de reflux, couramment désignés par l'expression « back-flow » peuvent être observés.

Les résistances fluidiques au sein d'un conduit ou un micro conduit dépendent d'une part des dimensions dudit conduit, mais aussi des viscosités des fluides. En particulier, la résistance fluidique se calcule en fonction de la viscosité dynamique du fluide ($\mu$), de la longueur du tuyau (L) et du diamètre interne du conduit (R) pour un conduit à section circulaire, ou des dimensions hauteur (h) et largeur (w) pour une section rectangle :

$$\text{Résistance fluidique section sphérique} = 8\mu L/(\pi R^4)$$

$$\text{Résistance fluidique section rectangulaire} = (12\mu L)/(1\text{-}0{,}63(h/w)\,h^3 w)$$

Afin de garantir des écoulements identiques de chacun des fluides, les résistances fluidiques au niveau des tubulures 22, 22' sont équilibrées ou contrôlées au sein du système au moyen des dimensions des tubulures 22, 22' implémentées. Par dimensions des tubulures 22, 22', on entend toutes les variables de dimensions affectant la résistance fluidique, notamment la Longueur et le Diamètre (section sphérique), ou la Longueur, et la Hauteur et la Largeur (section rectangulaire).

Dans un mode de réalisation, les tubulures 22, 22', dédiés au premier fluide et les tubulures 22, 22' dédiés au deuxième fluide présentent des dimensions sensiblement égales, notamment au niveau des tubulures de distribution 22, et/ou au niveau des tubulures de collecte 22'. Ce mode de réalisation est conseillé lorsque le système est destiné à sa mise en œuvre avec deux liquides de viscosité similaire, et les tubulures 22, 22' fournissent donc des résistances fluidiques similaires pour ces deux fluides avec les mêmes dimensions de tubulures 22, 22'. Toutefois, les dimensions peuvent être adaptées pour agir sur la stabilisation du système et la collecte de fluides.

Dans un mode de réalisation perfectionné, les dimensions de tubulures de collecte 22' sont choisies de manière générale pour fournir une résistance fluidique inférieure à une résistance fluidique au niveau de tubulures de distribution 22. C'est-à-dire que les tubulures de collecte 22' présentent des dimensions supérieures vis-à-vis des dimensions de tubulures de distribution 22. Avantageusement, ce mode de réalisation facilite la mise en équilibre du système, et permet l'opération des puces microfluidiques 10, 10' avec des débits plus importants, ainsi que la prévention des phénomènes de reflux.

De même, en contrôlant le ratio de résistance fluidique au niveau des tubulures de collecte 22' de deux fluides, il est possible d'agir au niveau de la sortie de circuits microfluidiques, et de sorte à augmenter la pureté du fluide d'intérêt. Par exemple, un déséquilibre dans le ratio de résistance fluidique au niveau des tubulures de collecte se traduit dans le déséquilibre de l'écoulement laminaire en sortie des circuits microfluidiques, et la récupération d'un des fluides avec des gouttelettes du deuxième fluide. D'autre part, le deuxième fluide sera plus pur car l'interphase de ce fluide aura été au moins partiellement éliminée.

Les dimensions des tubulures 22, 22' peuvent également être adaptées pour équilibrer les résistances fluidiques lors de l'écoulement de deux liquides de viscosité différente, tel qu'une huile et l'éthanol (ou une solution aqueuse ou hydroalcoolique). Le tableau 1, ci-après, montre un exemple détaillé d'adaptation des dimensions des tubulures de distribution 22 et des tubulures de collecte 22' pour un système mettant en œuvre une solution d'éthanol (viscosité approximative de 1 cP) et une solution d'huile de Chia (viscosité 35 cP). Les dimensions des tubulures 22, 22' sont donc contrôlées afin d'équilibrer ou contrôler les résistances fluidiques.

Tableau 1- Exemple de dimensionnement des tubulures pour un système microfluidique mettant en œuvre deux fluides.

| | Tubulures de distribution | Canal microfluidique principal | Tubulures de collecte | $\Sigma$ résistances fluidiques |
|---|---|---|---|---|
| Premier fluide « ethanol »<br><br>$\eta$= 1,2 m.Pa.s<br><br>d =0,789 g/cm$^3$ | Section : Sphérique<br>Dimensions :<br>Longueur (cm)= 15<br>Diamètre ($\mu$m)= 100<br><br><br><br>Résistance fluidique (Pa.s/m$^3$) =7,33E+13 | Section : Carrée<br>Dimensions :<br>Longueur (mm) : 7<br>Côtés : 162 $\mu$m<br>Volume éthanol ($\mu$L) : 4,29<br><br>Résistance fluidique (Pa.s/m$^3$) =1,82E+15 | Section : Sphérique<br>Dimensions :<br>Longueur (cm)= 25<br>Diamètre ($\mu$m)= 250<br><br><br><br>Résistance fluidique (Pa.s/m$^3$) =3,13E+12 | 1,89E+15 (Pa.s/m$^3$) |
| Deuxième fluide « huile »<br>$\eta$=35 m.Pa.s<br>d=0,93 g/cm$^3$ | Section : Sphérique<br>Dimensions :<br>Longueur (cm)= 20<br>Diamètre ($\mu$m)= 250<br><br><br>Résistance fluidique (Pa.s/m$^3$) =7,30E+13 | Section : Carrée<br>Dimensions :<br>Longueur (mm) : 7<br>Côtés : 162 $\mu$m<br>Volume huile ($\mu$L) : 15,57<br><br>Résistance fluidique (Pa.s/m$^3$) =1,89E+15 | Section : Sphérique<br>Dimensions :<br>Longueur (cm)= 15<br>Diamètre ($\mu$m)= 100<br><br><br>Résistance fluidique (Pa.s/m$^3$) =4,88E+12 | 1, 97E+15 (Pa.s/m$^3$) |
| Ratio Résistance fluidique | 1,0 | 1,0 | 1,6 | 1 |

En général, la viscosité de l'huile de chia étant beaucoup plus importante que celle de la solution d'éthanol, les dimensions des tubulures de distribution 22 et collecteurs 22' d'huile auront des dimensions supérieures à celles des tubulures de distribution 22 et collecteurs 22' de la solution d'éthanol pour fournir une même valeur de résistance fluidique.

Plus particulièrement, les résistances fluidiques sont équilibrées au niveau des tubulures de distribution 22 d'éthanol et d'huile de chia (ratio 1) en contrôlant les dimensions desdits tubulures. Les résistances fluidiques obtenues au niveau des puces microfluidiques sont ainsi équilibrées, ces puces comportant des circuits microfluidiques à dimensions identiques de section carrée, mais dans lequel le volume occupé par les deux fluides est distincte (voir figure 5).

En contraste, les résistances fluidiques sont volontairement déséquilibrées en sortie des circuits microfluidiques. D'une part, les résistances fluidiques sont inférieures de manière générale au niveau des tubulures de collecte 22', ce qui permet d'améliorer la stabilité du système et éviter les reflux. D'autre part, le ratio de résistance fluidiques éthanol/huile est délibérément choisi différent de 1 au niveau des tubulures de collecte 22' afin d'avoir une meilleure séparation de fluides. En effet, il est préférable d'obtenir quelques gouttes du mélange eau/éthanol dans le résidu huileux plutôt que l'inverse afin de ne pas contaminer l'extrait alcoolique.

Dans l'exemple illustré, avec un ratio d'éthanol/huile de 1,6, la résistance en sortie du résidu huileux est plus importante, ce qui augmente légèrement la pression côté éthanol, et pousse ainsi quelques gouttes de solution d'éthanol dans l'huile. De plus, cet effet sur la séparation peut être augmenté en jouant sur les pressions d'entrée exercées par le contrôleur de pression, en variant par exemple de quelques dizaines à centaines de mbar les pressions d'entrée.

Tel qu'illustré sur la figure 1, les tubulures sont reliées aux manifolds et aux puces microfluidiques au moyen des connecteurs 23 visés. Il est ainsi possible d'assurer l'étanchéité de ces connexions, et d'utiliser des pressions plus élevées dans le système sans risque de fuites. En particulier, des connecteurs visés 23 sont présents au niveau des chacune des ouvertures périphériques 210a, 210b, 210a', 210b' des canalisations 21a, 21b, ainsi qu'au niveau de chacune des entrées et sorties des circuits microfluidiques 11. Les connecteurs peuvent être réalisés en matériau métallique ou en polymère inerte tel qu'en silicone, ou polymère fluoré type FEP (éthylène propylène fluoré), PFA (perfluoroalkoxy), PEAK (polyaryléthercétones), ou PTFE (polytétrafluoroéthylène).

Pour sa part, le manifold est de préférence réalisé en matériau plastique inerte, tel que du PMMA, soit en verre ou en métal. En fonction du matériau choisi, le distributeur sera fabriqué selon un procédé de fabrication microfluidique adapté, tel que par : déposition et électrodéposition, gravure, collage, moulage par injection, embossage et photolithographie.

La figure 6 illustre la configuration de la canalisation d'un manifold distributeur 20 ou collecteur 20' selon le mode de réalisation de la figure 1. Chaque manifold 20, 20' présente une forme cylindrique circulaire de relativement faible hauteur et intègre deux canalisations 21a, 21b destinées respectivement à l'alimentation ou la collecte d'un de deux des fluides. Chaque canalisation défini un circuit de conduits comportant une ouverture centrale 212a, 212b débouchant dans un conduit unique 211a, 211b, qui se divise radialement dans une série d'embranchements progressifs jusqu'à déboucher dans une pluralité d'ouvertures périphériques 210a, 210b. Les ouvertures périphériques sont distribuées sur les parois latérales et cylindriques des manifolds. Bien entendu, le manifold distributeur 20a utilise les ouvertures centrales 212a, 212b comme entrées de chacun de deux fluides (i.e. Ethanol-huile) au système d'alimentation et de collecte central 2, alors que le manifold collecteur 20' utilise ces ouvertures centrales comme sorties du système d'alimentation et collecte centrale 2.

A chaque embranchement des canalisations, le circuit des conduits se divise en deux, et jusqu'à avoir le nombre nécessaire des ouvertures périphériques pour alimenter les circuits microfluidiques à implémenter dans le système. De préférence, à chaque embranchement un diamètre interne de la canalisation est réduit pour augmenter graduellement les résistances fluidiques au travers desdites canalisations et avoir un diamètre des ouvertures périphériques d'environ 1 mm. Par exemple, en passant d'un diamètre initial d'entre 5-10 mm et le réduisant progressivement jusqu'à environ 1 mm, tel qu'entre 500 $\mu$m et 1500 $\mu$m. Pour l'exemple illustré de soixante-quatre circuits microfluidiques, cinq embranchements sont nécessaires, et le diamètre initial est par exemple de 6mm, puis réduit à chaque embranchement pour passer à 4 mm, 3mm, 2 mm et jusqu'à 1 mm au niveau des ouvertures périphériques. Avantageusement, ce type de manifold permet d'alimenter et collecter de manière homogène l'ensemble des circuits microfluidiques, et donc d'obtenir des écoulements identiques au sein de chaque puce microfluidique 10, 10'.

Dans un autre mode de réalisation, les canalisations 21a, 21b, des manifolds peuvent être configurées différemment, l'essentiel étant que sa configuration permette de distribuer un flux central de manière homogène en plusieurs ouvertures périphériques. Par exemple avec un embranchement du conduit unique directement dans le nombre de conduits nécessaires pour alimenter ou collecter les puces microfluidiques. De même chaque canalisation peut être implémentée dans un manifold indépendant, et qui viendrait se superposer au nombre de manifolds nécessaires pour alimenter et collecter ledit système. Il sera également possible de concevoir différemment les circuits de conduits des canalisations de distribution et de collecte selon les besoins d'un système microfluidique particulier. La forme cylindrique extérieur du manifold n'est pas limitative non plus, l'essentiel étant de pouvoir superposer lesdites canalisations et d'agencer régulièrement lesdites ouvertures périphériques.

Tel qu'illustré sur la figure 7 le système microfluidique de la figure 1 peut être installé sur un plateau 3 sur lequel est installé une caméra 4. Avantageusement, le plateau intègre un rail 40 circulaire entourant les puces microfluidiques 10, 10' et sur lequel se déplace la caméra 4. Le rail 40 permet à la caméra 40 de se positionner ainsi en face de chaque puce microfluidique pour inspecter l'écoulement au niveau des circuits microfluidiques 11. Bien entendu, dans ce mode de réalisation le support des circuits microfluidiques est transparent et le cadre support des puces microfluidiques maintien uniquement le contour du support (tel qu'illustré), de sorte que la caméra 4 puisse capturer l'écoulement de fluides au niveau des circuits microfluidiques 11. La caméra 4 est reliée également à un écran 41 intégrant optionnellement un programme de contrôle de ladite caméra, et permettant d'afficher les images captées par la caméra 4.

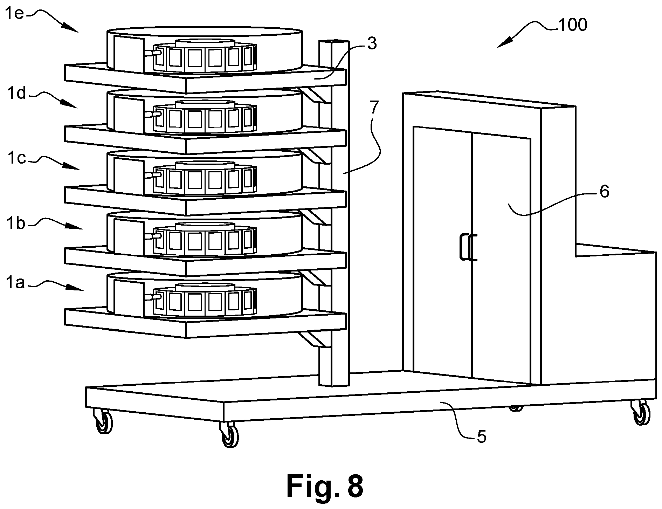

Comme illustré sur la figure 8, une mini-usine microfluidique 100 est obtenue par l'empilement en étages de plusieurs plateaux supportant respectivement un système microfluidique 1a,1b, 1c, 1d, et 1e selon l'invention. Dans l'exemple, cette mini-usine microfluidique met en œuvre cinq étages des plateaux 3, chaque plateau 3 intégrant un système microfluidique 1a,1b, 1c, 1d, et 1e à parallélisation circulaire avec seize puces microfluidiques 10 et soixante-quatre circuits microfluidiques 11. La mini-usine microfluidique 100 intègre ainsi quatre-vingt puces microfluidiques et trois cent vingt circuits microfluidiques. Les différents plateaux 3 peuvent être alimentés et collectés également de manière centralisée à partir des cuves de stockage dédiés à chaque fluide et un contrôleur de pression à voies multiples. Dans le mode de réalisation illustré, la mini-usine microfluidique est installée sur une plateforme 5 comportant une armoire 6 de contrôle et un support prenant la forme d'un bras 7 vertical sur lequel sont fixés les différents plateaux en étages. En particulier, l'armoire 6 héberge les cuves, le contrôleur de pression, un coffre électrique et l'ensemble des éléments pour le contrôle de ladite mini-usine. Avantageusement, la canalisation de distribution et de collecte de fluides est configurée pour passer de manière non visible par la plateforme, puis par le bras 7 support de plateaux ainsi que par les plateaux 3. La mini-usine microfluidique 100 peut donc être également opéré de manière centrale, ainsi que relié à un terminal de contrôle tel qu'un ordinateur. Eventuellement, chaque étage du système peut être alimenté de manière indépendante au moyen des cuves de stockage et de collecte dédiées à chaque étage.

Exemple 1

Un procédé d'écoulement laminaire liquide-liquide a été mis en œuvre pour tester le fonctionnement et l'opération d'un système microfluidique parallélisé circulairement selon l'invention. Le test est réalisé en utilisant l'éthanol comme premier liquide et le squalane comme deuxième liquide de viscosité supérieure. Le squalane présente une viscosité de 31mPa.s très proche à la viscosité de l'huile de chia, et permet de substituer cette dernière huile dans le présent exemple. Le système microfluidique testé est celui du mode de réalisation illustré sur la figure 1, et comportant seize puces microfluidiques intégrant respectivement quatre canaux microfluidiques en double Y avec un canal microfluidique principale présentant une section carrée avec une hauteur de côtés de 162 $\mu$m. Les tubulures de liaison sont dimensionnées selon le tableau I pour optimiser la mise en opération et la stabilité du système.

Dans le test, l'éthanol et le squalane sont mis sous pression dans leur cuve de stockage dédiée au moyen d'un contrôleur unique de pression de type Elveflow. En particulier, l'éthanol est mis à une pression de 6800 mbar et l'éthanol à 4400 mbar ce qui permet de pousser chaque liquide au travers des canalisations du manifold et au travers de canaux microfluidiques avec un régime laminaire stable. Le système est facilement mis en équilibre et opéré de manière continue avec une différence de pressions permettant d'améliorer la pureté en sortie de l'éthanol. Le débit en sorti d'éthanol à l'équilibre est de 767 g/h et le débit en squalane en équilibre est de 182 g/h. Cela correspond également au rendement d'un des étages de la mini-usine microfluidique, dont l'extrapolation à cinq étages est de 910g/h d'huile traitée, soit 21.8kg/h sur 24h d'extraction sur ladite mini-usine microfluidique à alimentation et collecte centrale automatisée.

Example 2

Le système microfluidique de l'exemple 1 a été également mis en opération pour un procédé d'extraction éthanol-huile de café vert. L'huile de café vert présente une viscosité de 104 mPa.s et la pression utilisée sur ce liquide est donc adaptée en conséquence. En particulier, il est mis en œuvre une pression à l'équilibre d'éthanol de 6800 mbar et de 5070 mbar pour l'huile de café vert. Le débit en sortie à l'équilibre de l'éthanol est de 866,1g/h et de l'huile de café de 102,8g/h, soit une productivité extrapolée pour l'usine microfluidique à 5 étages de 514g/h d'huile traitée, et de 12.3kg/h sur 24h d'extraction.

Liste de références :

- Système microfluidique 1 ;
- Système d'alimentation et de collecte central 2
- Puces microfluidiques 10 ;
- Circuits microfluidiques 11 ;
- Entrée 110 (de circuit microfluidique) ;
- Canal microfluidique 111 ;
- Sortie 120 (de circuit microfluidique) ;
- Cadre support 15 ;
- Manifold distributeur 20 ;
- Manifold collecteur 20' ;

- Support S ;
- Canalisations 21a, 21b (des manifolds) ;
- Ouvertures périphériques 210a, 210b, 210a', 210b' (des canalisations) ;
- Ouverture centrale 212a, 212b (des canalisations) ;
- Tubulures 22 ;
- Connecteurs 23 ;
- Connecteur de flux central 24
- Plateau 3 ;
- Caméra 4 ;
- Rail 40 ;
- Ecran 41 ;
- Mini-usine microfluidique 100 ;
- Plateforme 5 ;
- Armoire 6 ;
- Bras 7.

## Revendications

1.  Système microfluidique (1) parallélisé à haute productivité, ledit système comportant plusieurs puces microfluidiques (10) configurées pour opérer en parallèle, et intégrant respectivement une pluralité de circuits microfluidiques (11) reliés à un système d'alimentation et de collecte central (2) dudit système microfluidique (1), **caractérisé en ce que** :

    - le système d'alimentation et de collecte central (2) comporte des canalisations (21a, 21b) superposées de distribution et de collecte radiale et homogène de fluide, chaque canalisation étant pourvue d'une ouverture centrale (212a, 212b) débouchant dans des ouvertures périphériques (210a, 210b, 210a', 210b') distribuées circulairement selon un premier rayon autour d'un centre dudit système d'alimentation et de collecte central (2), et étant destinées à la distribution ou la collecte d'un fluide, et **en ce que** :

        - lesdites puces microfluidiques (10) sont également agencées circulairement, et de manière concentrique aux ouvertures périphériques selon un deuxième rayon supérieur audit premier rayon.

2.  Système microfluidique selon la revendication 1, dans lequel chaque circuit microfluidique comporte des entrées (110) et des sorties (120) reliées au système d'alimentation et de collecte central (2), de manière indépendante et au moyen des tubulures (22, 22') dédiées, lesdites tubulures (22, 22') reliant chacune des ouvertures périphériques (210a, 210b) des canalisations (21a, 21b) avec l'une dédites entrées (110) ou desdites sorties (120) des circuits microfluidiques (11).

3.  Système microfluidique selon l'une des revendications précédentes, comportant un nombre de canalisations (21a, 21b) de distribution radiale de flux égal au nombre de fluides à introduire dans le système, et un nombre de canalisations de collecte radiale de flux égal au nombre de fluides à collecter dans le système, et lesdites canalisations sont intégrées dans un ou plusieurs manifolds comportant une forme extérieure de cylindre, et avec les ouvertures périphériques desdites canalisations distribuées sur des parois cylindriques et latérales dudit ou desdits manifolds.

4.  Système microfluidique selon l'une des revendications précédentes, ledit système étant destiné à opérer avec deux fluides pour réaliser une extraction liquide-liquide, et dans lequel le système d'alimentation et de collecte central (2) comporte deux manifolds (20, 20') superposés de forme extérieure cylindrique, chaque manifold intégrant deux desdites canalisations superposées de distribution ou de collecte radial de flux, de sorte que les ouvertures périphériques (210a, 210b ) desdites deux canalisations sont distribuées sur des parois cylindriques et latérales de chaque manifold (20, 20'), un premier manifold distributeur (22) pour l'alimentation des circuits microfluidiques (11) avec deux fluides et un deuxième manifold collecteur (22') pour la collecte desdits deux fluides en sortie de circuits microfluidiques (11).

5.  Système microfluidique selon l'une des revendications précédentes, ledit système étant destiné à opérer avec deux fluides, et dans lequel les circuits microfluidiques des puces microfluidiques sont du type double « Y », et lesdites puces microfluidiques (10) sont disposées selon un plan d'écoulement vertical sur un cadre support (15), face au système d'alimentation et de collecte central (2) et suivant ledit deuxième rayon.

**6.** Système microfluidique selon l'une des revendications précédentes, dans lequel les tubulures (22, 22') sont connectées aux ouvertures périphériques (210a, 210b), et aux entrées (110) et aux sorties (120) des circuits microfluidiques (11) au moyen des connecteurs (23) avec moyen de fixation, et de préférence au moyen de connecteurs visés.

**7.** Système microfluidique selon l'une des revendications précédentes, dans lequel lesdits tubulures (22, 22') présentent une section transversale de l'ordre du micromètre et comportent :

- des tubulures de distribution (22) reliant individuellement les ouvertures périphériques (210a, 210b) destinées à la distribution de fluides avec les entrées (110) des circuits microfluidiques (11) ; et
- des tubulures de collecte (22') reliant individuellement les ouvertures périphériques (210a', 210b') destinées à la collecte de fluides avec les sorties (210) des circuits microfluidiques (11),

et dans lequel au moins une partie desdites tubulures de distribution (22) et/ou de collecte (22') présentent des dimensions différentes par rapport aux autres tubulures de distribution (22') et/ou de collecte (22').

**8.** Système microfluidique selon la revendication 7, dans lequel les tubulures de de collecte (22') présentent des dimensions supérieures à des dimensions des tubulures de distribution (22), et lesdites dimensions définissent une résistance fluidique au niveau des tubulures de de collecte (22') inférieure à une résistance fluidique au niveau des tubulures de distribution (22) pour faciliter la collecte desdits fluides.

**9.** Système microfluidique selon l'une des revendications 7 ou 8, ledit système étant destiné à opérer avec deux fluides a, b de viscosités différentes, à savoir un premier fluide de viscosité inférieure et un deuxième fluide de viscosité supérieure, et dans lequel :

- les tubulures de distribution (22') pour le premier fluide de viscosité inférieure présentent des dimensions inférieures par rapport aux dimensions des tubulures de distribution (22') du deuxième fluide de viscosité supérieure, et lesdites dimensions définissent une résistance fluidique équilibrée pour les deux fluides au niveau des tubulures de distribution (22) ; et/ou dans lequel
- les tubulures de de collecte (22') d'un premier fluide présentent des dimensions différentes par rapport aux tubulures de collecte (22') du deuxième fluide, et afin de déséquilibrer un ratio de résistances fluidiques entre les deux fluides au niveau de tubulures de collecte et d'agir sur la pureté de la séparation de l'un desdits fluides.

**10.** Système microfluidiques selon l'une des revendications précédentes, dans lequel ledit système microfluidique est installé sur un support tel qu'un plateau (3) et comporte une caméra mobile (4) sur un rail (40) entourant lesdites puces microfluidiques (10), ladite caméra (4) étant configurée pour surveiller l'écoulement des fluides au niveau des circuits microfluidiques (11).

**11.** Système microfluidique selon l'une des revendication précédentes, ledit système comportant une cuve de stockage pour chaque fluide à alimenter et à collecter dans le système, et un contrôleur de pression à voies multiples configuré pour mettre sous pression les fluides dans les cuves de stockage pour alimenter le système avec une pression configurable pour chaque cuve de stockage.

**12.** Mini-usine microfluidique (100) comportant une pluralité de systèmes microfluidiques (1a, 1b, 1c, 1d, 1e) selon l'une des revendications 1 à 10, chacun desdits systèmes microfluidiques étant installé sur un plateau (3), et lesdits plateaux (3) étant disposés en étages sur un support, tel qu'un bras (3) intégrant une canalisation d'alimentation et de collecte de ladite pluralité de systèmes microfluidiques ((1a, 1b, 1c,1d, 1e), et de préférence ladite mini-usine microfluidique (100) est installée sur une plateforme (5) mobile .

**13.** Mini-usine microfluidique (100) selon la revendication 12, ladite mini-usine microfluidique (100) comportant une armoire (6) de stockage comportant une cuve de stockage pour chaque fluide à alimenter et à collecter dans ladite mini-usine microfluidique, et un contrôleur de pression à voies multiples configuré pour mettre sous pression les fluides dans les cuves de stockage avec une pression configurable pour chaque cuve de stockage, et de sorte que ladite pluralité de systèmes microfluidiques est alimentée et collectée à partir desdites cuves de stockage.

**14.** Mini-usine microfluidique (100) selon la revendication 13, ladite mini-usine comportant cinq étages de systèmes microfluidiques (1) installés respectivement sur lesdits plateaux (3), et chaque système microfluidique (1) comporte 16 puces microfluidiques (10).

15. Procédé d'extraction liquide-liquide pour l'obtention d'actifs naturels au moyen d'un système microfluidique, ledit procédé mettant en œuvre deux liquides, tel qu'une solution hydroalcoolique et une huile naturelle ; ledit procédé comportant une étape d'extraction dans laquelle on fait écouler lesdits liquides côte à côte selon un régime laminaire dans des circuits microfluidiques (11) d'un système microfluidique (1) selon l'une des revendications 1 à 11, ou d'une mini-usine microfluidique selon l'une des revendications 12 à 14.

**Patentansprüche**

1. Parallelisiertes mikrofluidisches System (1) mit hoher Produktivität, wobei das System mehrere mikrofluidische Chips (10) umfasst, die dazu ausgestaltet sind, parallel zu arbeiten, und jeweils eine Mehrzahl von mikrofluidischen Kreisen (11) beinhaltet, die mit einem zentralen Versorgungs- und Sammelsystem (2) des mikrofluidischen Systems (1) verbunden sind, **dadurch gekennzeichnet, dass**:

    - das zentrale Versorgungs- und Sammelsystem (2) übereinander liegende Kanäle (21a, 21b) zum radialen und homogenen Verteilen und Sammeln von Fluid umfasst, wobei jeder Kanal mit einer zentralen Öffnung (212a, 212b) versehen ist, die in peripheren Öffnungen (210a, 210b, 210a', 210b') mündet, die kreisförmig gemäß einem ersten Radius um einen Mittelpunkt des zentralen Versorgungs- und Sammelsystems (2) verteilt sind und zum Verteilen oder Sammeln eines Fluids bestimmt sind, und dass:

        - die mikrofluidischen Chips (10) ebenfalls kreisförmig und konzentrisch zu den peripheren Öffnungen gemäß einem zweiten Radius angeordnet sind, der größer als der erste Radius ist.

2. Mikrofluidisches System nach Anspruch 1, wobei jeder mikrofluidische Kreis Einlässe (110) und Auslässe (120) umfasst, die mit dem zentralen Versorgungs- und Sammelsystem (2) unabhängig und mittels dedizierter Leitungen (22, 22') verbunden sind, wobei die Leitungen (22, 22') jede der peripheren Öffnungen (210a, 210b) der Kanäle (21a, 21b) mit einem der Einlässe (110) oder der Auslässe (120) der mikrofluidischen Kreise (11) verbinden.

3. Mikrofluidisches System nach einem der vorhergehenden Ansprüche, umfassend eine Anzahl von Kanälen (21a, 21b) zum radialen Verteilen eines Stroms gleich der Anzahl von in das System einzuleitenden Fluiden und eine Anzahl von Kanälen zum radialen Sammeln eines Stroms gleich der Anzahl von in dem System zu sammelnden Fluiden, und wobei die Kanäle in einen oder mehrere Manifolds integriert sind, die eine Außenform eines Zylinders umfassen, und wobei die peripheren Öffnungen der Kanäle an zylindrischen und seitlichen Wänden des oder der Manifolds verteilt sind.

4. Mikrofluidisches System nach einem der vorhergehenden Ansprüche, wobei das System dazu bestimmt ist, mit zwei Fluiden zu arbeiten, um eine Flüssig-Flüssig-Extraktion auszuführen, und wobei das zentrale Versorgungs- und Sammelsystem (2) zwei übereinander liegende Manifolds (20, 20') mit zylindrischer Außenform umfasst, wobei jeder Manifold zwei der übereinander liegenden Kanäle zum radialen Verteilen oder Sammeln eines Stroms umfasst, so dass die peripheren Öffnungen (210a, 210b) der beiden Kanäle an zylindrischen und seitlichen Wänden jedes Manifolds (20, 20') verteilt sind, eines ersten verteilenden Manifolds (22) zum Versorgen der mikrofludischen Kreise (11) mit zwei Fluiden und eines zweiten sammelnder Manifold (22') zum Sammeln der beiden Fluide im Auslass von mikrofluidischen Kreisen (11).

5. Mikrofluidisches System nach einem der vorhergehenden Ansprüche, wobei das System dazu bestimmt ist, mit zwei Fluiden zu arbeiten, und wobei die mikrofluidischen Kreise der mikrofluidischen Chips vom Typ eines doppelten "Y" sind und die mikrofluidischen Chips (10) gemäß einer vertikalen Strömungsebene an einem Trägerrahmen (15) gegenüber dem zentralen Versorgungs- und Sammelsystem (2) und gemäß dem zweiten Radius angeordnet sind.

6. Mikrofluidisches System nach einem der vorhergehenden Ansprüche, wobei die Leitungen (22, 22') an die peripheren Öffnungen (210a, 210b) und an die Einlässe (110) und an die Auslässe (120) der mikrofluidischen Kreise (11) mittels von Verbindern (23) mit Befestigungsmittel und bevorzugt mittels von geschraubten Verbindern angeschlossen sind.

7. Mikrofluidisches System nach einem der vorhergehenden Ansprüche, wobei die Leitungen (22, 22') einen Querschnitt in der Größenordnung eines Mikrometers aufweisen und umfassen:

    - Verteilungsleitungen (22), welche einzeln die zum Verteilen von Fluiden bestimmten peripheren Öffnungen (210a, 210b) mit den Einlässen (110) der mikrofluidischen Kreise (11) verbinden; und

- Sammelleitungen (22'), welche einzeln die zum Sammeln von Fluiden bestimmten peripheren Öffnungen (210a', 210b') mit den Auslässen (210) der mikrofluidischen Kreise (11) verbinden,

und wobei mindestens ein Teil der Verteilungsleitungen (22) und/oder Sammelleitungen (22') Abmessungen aufweisen, die verschieden von denen der anderen Verteilungsleitungen (22') und/oder Sammelleitungen (22') sind.

8. Mikrofluidisches System nach Anspruch 7, wobei die Sammelleitungen (22') Abmessungen aufweisen, die größer als Abmessungen der Verteilungsleitungen (22) sind, und die Abmessungen einen fluidischen Widerstand an den Sammelleitungen (22') definieren, der geringer als ein fluidischer Widerstand an den Verteilungsleitungen (22) ist, um das Sammeln der Fluide zu erleichtern.

9. Mikrofluidisches System nach einem der Ansprüche 7 oder 8, wobei das System dazu bestimmt ist, mit zwei Fluiden a, b mit unterschiedlichen Viskositäten zu arbeiten, d. h. einem ersten Fluid mit geringerer Viskosität und einem zweiten Fluid mit höherer Viskosität, und wobei:

- die Verteilungsleitungen (22') für das erste Fluid mit geringerer Viskosität Abmessungen aufweisen, die geringer als die Abmessungen der Verteilungsleitungen (22') des zweiten Fluids mit höherer Viskosität sind, und wobei die Abmessungen einen ausgeglichenen fluidischen Widerstand für die beiden Fluide an den Verteilungsleitungen (22) definieren; und/oder wobei - die Sammelleitungen (22') eines ersten Fluids Abmessungen aufweisen, die verschieden von denen der Sammelleitungen (22') des zweiten Fluids sind, und um ein Verhältnis von fluidischen Widerständen zwischen den beiden Fluiden an Sammelleitungen aus dem Gleichgewicht zu bringen und auf die Reinheit der Trennung des einen der Fluide einzuwirken.

10. Mikrofluidisches System nach einem der vorhergehenden Ansprüche, wobei das mikrofluidische System auf einem Träger wie einer Platte (3) installiert ist und eine mobile Kamera (4) auf einer Schiene (40) umfasst, die die mikrofluidischen Chips (10) umgibt, wobei die Kamera (4) dazu ausgestaltet ist, das Strömen der Fluide an den mikrofluidischen Kreisen (11) zu überwachen.

11. Mikrofluidisches System nach einem der vorhergehenden Ansprüche, wobei das System einen Lagerbehälter für jedes in dem System zuzuführende und zu sammelnde Fluid umfasst und einen Druckregler mit mehreren Wegen, der dazu ausgestaltet ist, die Fluide in den Lagerbehältern unter Druck zu setzen, um das System mit einem Druck zu versorgen, der für jeden Lagerbehälter einstellbar ist.

12. Mikrofluidische Minifabrik (100), die eine Mehrzahl von mikrofluidischen Systemen (1a, 1b, 1c, 1d, 1e) nach einem der Ansprüche 1 bis 10 umfasst, wobei jedes der mikrofluidischen Systeme auf einer Platte (3) installiert ist und wobei die Platten (3) in Etagen auf einem Träger wie einem Arm (3) angeordnet sind, der einen Versorgungs- und Sammelkanal für die Mehrzahl von mikrofluidischen Systemen (1a, 1b, 1c, 1d, 1e) umfasst, und wobei die mikrofluidische Minifabrik (100) bevorzugt auf einer mobilen Plattform (5) installiert ist.

13. Mikrofluidische Minifabrik (100) nach Anspruch 12, wobei die mikrofluidische Minifabrik (100) einen Lagerschrank (6) umfasst, der einen Lagerbehälter für jedes in der mikrofluidischen Minifabrik zuzuführende und zu sammelnde Fluid umfasst und einen Druckregler mit mehreren Wegen, der dazu ausgestaltet ist, die Fluide in den Lagerbehältern mit einem Druck unter Druck zu setzen, der für jeden Lagerbehälter einstellbar ist, so dass die Mehrzahl von mikrofluidischen Systemen ausgehend den Lagerbehältern versorgt und gesammelt wird.

14. Mikrofluidische Minifabrik (100) nach Anspruch 13, wobei die Minifabrik fünf Etagen mit mikrofluidischen Systemen (1) umfasst, die jeweils auf den Platten (3) installiert sind, und wobei jedes mikrofluidische System (1) 16 mikrofluidische Chips (10) umfasst.

15. Verfahren zur Flüssig-Flüssig-Extraktion zum Gewinnen natürlicher Wirkstoffe mittels eines mikrofluidischen Systems, wobei das Verfahren zwei Flüssigkeiten wie etwa eine hydroalkoholische Lösung und ein natürliches Öl einsetzt; wobei das Verfahren einen Extraktionsschritt umfasst, bei dem man die Flüssigkeiten nebeneinander in einem laminaren Zustand in mikrofluidischen Kreisen (11) eines mikrofluidischen Systems (1) nach einem der Ansprüche 1 bis 11 oder einer mikrofluidischen Minifabrik nach einem der Ansprüche 12 bis 14 strömen lässt.

**Claims**

1. High-productivity parallelized microfluidic system (1), said system having a plurality of microfluidic chips (10) configured to operate in parallel, and respectively integrating a plurality of microfluidic circuits (11) connected to a central supply and collection system (2) of said microfluidic system (1), **characterized in that**:

   - the central supply and collection system (2) has superposed pipes (21a, 21b) for radial and homogeneous fluid distribution and collection, each pipe being provided with a central opening (212a, 212b) opening into peripheral openings (210a, 210b, 210a', 210b') distributed in a circular manner according to a first radius around a centre of said central supply and collection system (2), and being intended for the distribution or collection of a fluid, and **in that**:

   - said microfluidic chips (10) are also arranged in a circular manner, and so as to be concentric with the peripheral openings according to a second radius greater than said first radius.

2. Microfluidic system according to Claim 1, wherein each microfluidic circuit has inlets (110) and outlets (120) connected to the central supply and collection system (2), independently and by means of dedicated tubes (22, 22'), said tubes (22, 22') connecting each of the peripheral openings (210a, 210b) of the pipes (21a, 21b) with one of said inlets (110) or said outlets (120) of the microfluidic circuits (11).

3. Microfluidic system according to either of the preceding claims, having a number of radial stream distribution pipes (21a, 21b) that is equal to the number of fluids to be introduced into the system, and a number of radial stream collection pipes that is equal to the number of fluids to be collected in the system, and said pipes are integrated in one or more manifolds having a cylindrical outer shape, and with the peripheral openings of said pipes distributed over cylindrical and lateral walls of said one or more manifolds.

4. Microfluidic system according to one of the preceding claims, said system being intended to operate with two fluids to perform a liquid-liquid extraction, and wherein the central supply and collection system (2) has two superposed manifolds (20, 20') of cylindrical outer shape, each manifold integrating two of said superposed pipes for radial stream distribution or collection, such that the peripheral openings (210a, 210b) of said two pipes are distributed over cylindrical and lateral walls of each manifold (20, 20'), a first, distributing manifold (22) for supplying the microfluidic circuits (11) with two fluids and a second, collecting manifold (22'), for collecting said two fluids at the outlet of microfluidic circuits (11).

5. Microfluidic system according to one of the preceding claims, said system being intended to operate with two fluids, and wherein the microfluidic circuits of the microfluidic chips are of the double "Y" type, and said microfluidic chips (10) are disposed in a vertical flow plane on a support frame (15), facing the central supply and collection system (2) and according to said second radius.

6. Microfluidic system according to one of the preceding claims, wherein the tubes (22, 22') are connected to the peripheral openings (210a, 210b), and to the inlets (110) and outlets (120) of the microfluidic circuits (11) by means of connectors (23) with fastening means, and preferably by means of targeted connectors.

7. Microfluidic system according to one of the preceding claims, wherein said tubes (22, 22') have a cross section of the order of a micrometre and have:

   - distribution tubes (22) individually connecting the peripheral openings (210a, 210b) intended for distributing fluids with the inlets (110) of the microfluidic circuits (11); and
   - collection tubes (22') individually connecting the peripheral openings (210a', 210b') intended for collecting fluids with the outlets (210) of the microfluidic circuits (11),

   and wherein at least some of said distribution (22) and/or collection (22') tubes have different dimensions with respect to the other distribution (22') and/or collection (22') tubes.

8. Microfluidic system according to Claim 7, wherein the collection tubes (22') have dimensions larger than dimensions of the distribution tubes (22), and said dimensions define a fluidic resistance at the collection tubes (22') that is lower than a fluidic resistance at the distribution tubes (22) to make the collection of said fluids easier.

9. Microfluidic system according to either of Claims 7 and 8, said system being intended to operate with two fluids a, b of different viscosities, namely a first fluid of lower viscosity and a second fluid of higher viscosity, and wherein:

- the distribution tubes (22') for the first fluid of lower viscosity have smaller dimensions with respect to the dimensions of the distribution tubes (22') for the second fluid of higher viscosity, and said dimensions define a balanced fluidic resistance for the two fluids at the distribution tubes (22); and/or wherein
- the collection tubes (22') for a first fluid have different dimensions with respect to the collection tubes (22') for the second fluid, and in order to unbalance a ratio of fluidic resistances between the two fluids at collection tubes and to act on the purity of the separation of one of said fluids.

10. Microfluidic system according to one of the preceding claims, wherein said microfluidic system is installed on a support such as a plate (3) and has a camera (4) that is able to move on a rail (40) surrounding said microfluidic chips (10), said camera (4) being configured to monitor the flow of the fluids at the microfluidic circuits (11).

11. Microfluidic system according to one of the preceding claims, said system having a storage tank for each fluid to be supplied and collected in the system, and a multi-way pressure controller configured to pressurize the fluids in the storage tanks to supply the system with a pressure that is configurable for each storage tank.

12. Microfluidic mini-plant (100) having a plurality of microfluidic systems (1a, 1b, 1c, 1d, 1e) according to one of Claims 1 to 10, each of said microfluidic systems being installed on a plate (3), and said plates (3) being disposed in stages on a support, such as an arm (3) integrating a supply and collection pipe for said plurality of microfluidic systems (1a, 1b, 1c, 1d, 1e), and preferably said microfluidic mini-plant (100) is installed on a mobile platform (5).

13. Microfluidic mini-plant (100) according to Claim 12, said microfluidic mini-plant (100) having a storage cabinet (6) having a storage tank for each fluid to be supplied and collected in said microfluidic mini-plant, and a multi-way pressure controller configured to pressurize the fluids in the storage tanks with a pressure that is configurable for each storage tank, and such that said plurality of microfluidic systems is supplied and collected from said storage tanks.

14. Microfluidic mini-plant (100) according to Claim 13, said mini-plant having five stages of microfluidic systems (1) installed respectively on said plates (3), and each microfluidic system (1) has 16 microfluidic chips (10).

15. Liquid-liquid extraction process for obtaining natural active agents by means of a microfluidic system, said process implementing two liquids, such as an aqueous-alcoholic solution and a natural oil; said process involving a step of extraction in which said liquids are made to flow side by side according to a laminar regime in microfluidic circuits (11) of a microfluidic system (1) according to one of Claims 1 to 11, or a microfluidic mini-plant according to one of Claims 12 to 14.

**Fig. 1**

**Fig. 2**

**Fig. 3**

110a,110b    11    11,11,11

111

120a,120b

**Fig. 4**

h(µm)=162

Ethanol    Huile

w1(µm)=35    w2(µm)=127    Total(µm)=162

**Fig. 5**

**Fig. 6**

**Fig. 7**

1e

1d

1c

1b

1a

3

7

100

6

5

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2021058806 A

- EP 1391237 B1